# EUROPEAN PATENT APPLICATION

(11) **EP 1 393 970 A1**
(43) Date of publication of application: **03.03.2004**
(21) Application number: 03077718.9
(22) Date of filing: 28.08.2003
(51) Int. Cl.: B60P 7/06, B60J 7/12, B60J 7/10

(54) **Means of transport and method for the storage and transportation of goods**

(30) Priority: 28.08.2002 NL 1021351
(71) Applicant: Betrasystems B.V., 7136 KS Zieuwent (NL)
(72) Inventor: Beerten, Bernardus Maria Theresia, 7136 KS Zieuwent (NL)
(74) Representative: Dohmen, Johannes Maria Gerardus

(57) **Abstract**

A means of transport, such as a truck, and a method for the transportation and/or storage of goods (7), which means of transport comprises a loading platform (3) on which the goods (7) are to be placed, a tarpaulin (10) to be laid over the goods (7), which tarpaulin is to be secured to the loading platform (3). At least one compartment (12, 13), which is to be filled with a fluid, is positioned between the tarpaulin (10) and the goods (7), the volume of which compartment (12, 13) can be increased by filling it with fluid for tensioning the tarpaulin (10) that is secured to the loading platform (3). This makes it possible to use a lighter overall mechanical construction for the loading platform (3), with a tilt, among other things, no longer being needed for keeping the goods (7) together on the loading platform (3), as a result of which the overall weight of the means of transport can be reduced considerably, thus making it possible to transport a larger weight of goods (7) within the prevailing traffic regulations.

## Description

The invention relates to a means of transport, such as a truck, for the transportation and/or storage of goods, which means of transport comprises a loading platform on which the goods are to be placed, a tarpaulin to be laid over the goods, fastening means for fastening the tarpaulin to opposing edges of the loading platform, and at least one compartment to be filled with a fluid, which is positioned between the tarpaulin and the goods and whose volume can be increased by filling it with said fluid.

A means of transport or conveying device of this kind is known from German patent application No. 23 34 216.

Said German patent application relates to the protection of goods against moisture, in particular for preventing the formation of puddles on tarpaulins of trucks and the like. The invention proposes to place an inflatable bag between the goods and the tarpaulin, which bag will cause the tarpaulin to bulge outwards. Rain water can flow off sideways in that case.

After the goods have been loaded, the inflatable bag is placed over the goods, and subsequently the tarpaulin is laid over the goods and the bag. Then the bag is inflated until the tarpaulin bulges outwards at the upper side of the goods, that is, on the side of the goods remote from the loading platform. Subsequently, the bulging tarpaulin is fastened to the side edges of the loading platform.

For the transportation of, for example, palletised goods or goods packed in bags, such as the so-called "big bags", it is furthermore essential that the goods present on the loading platform of, for example, a truck or a trailer, be kept together.

In practice trucks and/or trailers are to that end provided with a frame for supporting the cover or tarpaulin, also called tilt, for covering the goods present on the loading platform.

When a tilt is used, it is in many cases also necessary to use tensioning belts or the like for keeping the loaded goods sufficiently firmly together on the loading platform. Because the goods are covered by the tarpaulin or a cover, the tensioning belts are not directly visible from the outside, so that it is not possible to visually check whether the belts are still sufficiently taut for keeping the goods together on the loading platform.

In addition to the fact that the frame adds weight to the total load of the truck or trailer and causes the drag to increase, it also interferes with the freedom of movement when loading goods onto the loading platform.

An important aim in the present-day transportation of goods, in particular in the case of road haulage, is to make trucks or lorries as light as possible, so that more or heavier goods can be loaded without increasing the overall weight. It should be considered in this connection that the overall weight (the cargo plus the own weight) of trucks and trailer trucks for road haulage is bound by strict regulations, and that a close watch is kept on the observance thereof. Such regulations will vary from country to country.

It goes without saying, of course, that it is very attractive, for economic and commercial reasons, for hauliers and shippers to transport an additional weight of cargo. Also from an environmental point of view it is preferable to transport more cargo in one run rather than make several runs for transporting the same quantity (or weight) of goods. Furthermore, the volume of traffic will decrease when fewer runs are made, as a result of which the risk of traffic jams and the like is reduced. Furthermore, traffic safety will increase when the roads are less crowded as a result of the number of runs being reduced.

Even if the weight of the cargo remains the same, the reduction of the weight of the means of transport has economic and environmental advantages, inter alia as a result of a reduced fuel consumption and a lower road tax in the case of a means of transport such as a truck or a trailer truck.

Different from the aforesaid German patent application No. 23 34 216, it is the object of the present invention to provide an improved means of transport for the storage and transportation of goods, in particular for increasing the weight of cargo (goods) that can be stored and transported on a means of transport, such as a truck or a trailer truck, within the prescribed overall weight thereof.

According to the invention, this objective is accomplished in that the tarpaulin and the fastening means are arranged for fastening the tarpaulin to the loading platform in such a manner that the tarpaulin is tensioned by filling said at least one compartment with a fluid so as to exert a pulling force on the loading platform from the edges thereof for the purpose of increasing the load-bearing capacity of the loading platform.

The invention is based on the perception that by first fastening the tarpaulin to the edges of the loading platform and subsequently tensioning the tarpaulin by filling said at least one compartment with a fluid, a pulling force can be exerted on the loading platform from the edges thereof, such that it is possible to use a lighter construction for the loading platform as such compared to usual loading platforms for supporting and/or transporting the same weight of cargo. That is, several supporting beams of the conventional loading platforms can be made lighter in weight. This leads to a very substantial saving in weight of the loading platform of the means of transport, such as a truck or a trailer, with the advantages as already discussed in the foregoing.

In addition, the goods are firmly kept together on the loading platform in this manner, so that in fact no special requirements need to be made as regards the packaging of the goods itself, so that it is possible to use usual pallets or "big bags" or other types of packaging, without a separate tilt and tensioning belts or racks or pallets especially fitted for this purpose being required. After all, the tarpaulin according to the invention combines the functions of cover and tensioning belt.

Since a separate superstructure or frame for the tilt is not necessary, it is possible to achieve a direct saving in weight in the order of 10% of the overall weight of the means of transport, such as a truck or a trailer, which can be directly translated into a larger carrying capacity of the means of transport, or lower transport costs or a lower burdening of the environment in the form of a reduced fuel consumption and a reduced road tax, whilst the overall weight remains the same.

The use of a tarpaulin according to the invention also reduces the drag of a truck or trailer in comparison with a truck or trailer fitted with a tilt according to the prior art, because the tarpaulin according to the invention compactly abuts the loaded goods in the operative position. This in contrast to a permanent superstructure, which has a specific height at all times, which height is adjusted to the maximum height of the goods or to the height of a person who must be able to walk on the loading platform under the superstructure.

With the means of transport according to the invention, for example in the form of a truck, it is furthermore not necessary to provide additional drag-reducing spoilers or the like, as is the case with a usual tilt. It will be apparent that this leads to a considerable further saving in costs.

Furthermore it has been found that the driving characteristics of trucks according to the invention strongly improve as a result of the goods being kept firmly together as a whole on the loading platform. In particular, the road-holding in bends and the like has been strongly improved in comparison with a truck fitted with a tilt or the like, as discussed in the foregoing.

In a preferred embodiment of the invention said at least one compartment is positioned in such a manner that it engages a side of the goods remote from the loading platform, i.e. the upper side of goods loaded on a horizontal loading platform. The goods are kept firmly in place on the loading platform in this manner, and the compartment provides additional protection of the goods against atmospheric influences. It should be understood that in accordance with the inventive concept it is also possible to provide a compartment between the tarpaulin and the goods on either side of the goods, whether or not in combination with a compartment at the upper side of the goods.

In order to prevent wear on the tarpaulin at the (upper) edges of the goods upon tensioning of the tarpaulin, which is done by filling said at least one compartment with a fluid, as much is possible, said at least one compartment is preferably positioned such that it engages a boundary edge on a side of the goods remote from the loading platform. It has been found that in fact compartments positioned at the boundary edges at the upper side of the goods will suffice, because this makes it possible to keep the tarpaulin flat as much as possible at the upper side, so that the tarpaulin will hardly add to the height of the cargo present on the means of transport, which is advantages when passing viaducts and the like. A bulging tarpaulin at the upper side of the goods might cause the overall height of a truck to increase, to such an extent that problems might arise when driving routes with relatively low viaducts, tunnels or other underpasses.

In a preferred embodiment of the invention, several compartments are used for achieving a desired distribution of forces, which compartments are arranged in such a manner that they are positioned adjacently to each other. An additional advantage of this embodiment is the fact that if one compartment should spring a leak, the tarpaulin will nevertheless remain sufficiently taut.

In yet another embodiment of the invention, said at least one compartment is advantageously attached to the tarpaulin. In a yet another embodiment, the tarpaulin and said at least one compartment are formed as a whole. In still yet another embodiment, the tarpaulin is double-walled in part, so that said at least one compartment can be incorporated between the double walls.

In yet another embodiment of the invention, the tarpaulin may consist of strip-shaped elements, which strip-shaped elements extend adjacently to each other, preferably in overlapping relationship, in the longitudinal direction of the tarpaulin in use, and each strip-shaped element may comprise at least one compartment.

With the latter embodiment it is possible to control the force that is exerted on the loaded goods upon filling of the compartments with fluid, in such a manner that the pressure exerted on the goods will not be too high.

Furthermore, if the tarpaulin is embodied as a series of strip-shaped elements, it will be possible to start covering the goods and providing compartments between the tarpaulin and the goods already present on the loading platform even before the loading of the goods has been completed. It will be understood that this also offers advantages when goods are being unloaded, because it will not be necessary in that case to remove the entire tarpaulin, or to clear all the compartments of fluid, when a limited amount of the goods is to be unloaded.

In yet another embodiment of the invention, a tarpaulin to be laid over the goods on the short sides of the loading platform comprises a flap-shaped part, which flap-shaped part is dimensioned such that it can be secured to the loading platform at the short sides thereof. In this way the goods are not only secured even more firmly against shifting undesirably on the loading platform, for example upon abrupt braking or accelerating of the means of transport, such as a truck, but in addition an effective protection against atmospheric influences is provided.

In a preferred embodiment of the invention, said at least one compartment is an inflatable compartment, which is to be filled with a gaseous fluid, such as air. Said at least one compartment may be made of polyester or another suitable plastic material.

In another embodiment of the means of transport according to the invention, said at least one compartment is provided with fluid inlet/outlet means, which may be interconnected for jointly letting in and discharging fluid when several compartments are used. The interconnected inlet/outlet means may be arranged, in a manner which is known per se, for being connected to a fluid source, such as a compressor or the like. Said inlet/outlet means may comprise an air valve.

In a preferred embodiment of the means of transport according to the invention, wherein the loading platform is elongated in shape, the loading platform comprises two supporting beams extending in the longitudinal direction of the loading platform, on the side of the loading platform remote from the side on which the cargo is to be placed, from which supporting beams one or more tension elements, such as tension rods, extend towards the longitudinal edges of the loading platform. The tension elements ensure that the loading platform will be sufficiently strong upon filling of the compartments with fluid, so that a loading platform of lighter construction will nevertheless exhibit sufficient resistance to tensile strain.

According to the invention, force sensors may advantageously be connected to the loading platform for registering forces acting on the loading platform, so that the filling of the compartments with fluid can take place in dependence thereon.

Also in this case it is advantageous to use strip-shaped tarpaulins and/or sub-compartments, so that it is possible when using a loading platform of lighter construction to place the tarpaulin and fill the compartments with fluid directly after part of the goods have been placed on the loading platform. In this way the loading platform is effectively prevented from bending or the like.

In order to indicate that there may be a risk that the loading platform will bend, for example as a result of one or more compartments springing a leak, said at least one compartment is provided with means, such as a pressure valve, for indicating any leakage of fluid from a compartment.

In a preferred embodiment of the invention, fastening means are provided on at least one edge of the loading platform for detachably connecting or securing the tarpaulin to the loading platform, which fastening means comprise a tubular rail of approximately C-shaped section arranged for receiving and removably retaining therein at least one clamping piece engaging the tarpaulin.

Thus, the tarpaulin can be quickly and firmly secured to the loading platform over any desired length by placing the clamping piece into the tubular rail.

In an embodiment of the invention, the sectional dimensions of the clamping piece and the rail are adjusted to each other for the purpose of removably retaining the clamping piece within the rail.

In order to make it possible to load the loading platform in a sufficiently flexible manner, the fastening means for fastening the tarpaulin to the loading platform are so constructed that surplus tarpaulin can be rolled up from the short sides thereof and be fastened to the loading platform in rolled-up condition.

In yet another embodiment of the invention, the fastening means are arranged in such a manner that surplus tarpaulin can be folded back over the cargo, as such providing additional protection against external influences for the tensioned part of the tarpaulin. The part that is to be folded back may be provided with suitable texts or the like.

The clamping piece may be elongated, for example in the shape of a beam, or be of approximately T-shaped section. Preferably, the sectional dimensions of the tubular rail and the beam are adjusted to each other in such a manner that the beam, with the tarpaulin wound thereon, can be locked in position within the tubular rail.

In yet another embodiment, the fastening means comprise carrying means disposed along the loading platform for carrying the beam with the tarpaulin that is wound thereon.

A clamping piece, such as a beam, may be advantageously attached to one end of the tarpaulin. It is also possible to use a round cylinder instead of a beam.

In a preferred embodiment of the invention, a pivotable flap extends along at least one edge of the loading platform, which flap functions to retain surplus tarpaulin, i.e. tarpaulin not being in contact with the goods, such as a hanging end portion of the tarpaulin, between the flap and the tensioned part of the tarpaulin in the tensioned condition of the tarpaulin. Said at least one pivotable flap is constructed in such a manner that it can be locked in the position in which it abuts against the tensioned tarpaulin. Suitable locking means are known per se to those skilled in the art.

According to a further embodiment of the invention, the tarpaulin can be retained between the flap and the loading platform when the means of transport is only partially loaded, or not at all, by pivotally connecting the flap in question to the loading platform, in such a manner that the flap can be pivoted onto the loading platform.

The side of the flap that faces towards the outside in use may be provided with a text or the like which, in use, can be read from the outside.

Such a flap is used advantageously with means of transport whose wheel covers closely adjoin the loading platform, i.e. where there is little space, if at all, between the wheel housings and the loading platform for accommodating carrying means for the tarpaulin.

The tarpaulin is preferably made of a non-stretch plastic material of sufficient tensile strength, such as polyester. Also other suitable materials of sufficient tensile strength can be used for the purpose of the invention, of course.

The invention also relates to a tarpaulin for use with a means of transport as discussed in the foregoing.

The invention further relates to a method for placing goods on a loading platform of a means of transport, such as a truck, and keeping said goods together thereon by covering the goods with a tarpaulin comprising at least one compartment positioned between the tarpaulin and the goods, which can be filled with a fluid, fastening said tarpaulin to opposing edges of the loading platform and increasing the volume of said compartment by filling it with a fluid, characterized in that the tarpaulin is firmly connected to the loading platform and in that said at least one compartment is filled with a fluid for tensioning the tarpaulin so as to exert a pulling force on the loading platform from the edges thereof for the purpose of increasing the load-bearing capacity of the loading platform.

Said at least one compartment is preferably provided at the boundary edges, on the side of the goods remote from the loading platform.

In another embodiment of the method according to the invention, wherein the tarpaulin is strip-shaped and a plurality of tarpaulins are laid over the goods present on an elongated loading platform in transverse direction relative to said loading platform, in such a manner that tarpaulins lying adjacently to each other partially overlap, tarpaulins comprising compartments positioned between said tarpaulins, which are to be filled with a fluid, are already laid over the goods present on the loading platform while the goods are being loaded, and said compartments are already filled with fluid before the entire loading platform is loaded with goods. All this is done in such a manner that the loading platform is already partially placed under tension, through tensioning of the tarpaulin, during the loading of the goods.

The invention furthermore provides a method for loading goods onto an elongated loading platform of a means of transport according to the invention, in such a manner that the goods are placed onto the loading platform from a side thereof.

According to the invention, this is possible because it is not necessary to provide a superstructure or a frame on the platform for a tilt or the like, which superstructure or frame in practice interferes with the freedom of movement when loading the goods.

Further advantages and features of the means of transport according to the invention and of the method and tarpaulin will be described in more detail hereinafter with reference to the appended drawing. In the drawing:
Figure 1 is a schematic side elevation of an embodiment of a means of transport in the form of a truck according to the invention.
Figure 2 is a schematic sectional view along the line II-II in Figure 1.
Figures 3a and 3b are schematic sectional views of an embodiment of fastening means for fastening a tarpaulin to the loading platform of the means of transport according to the invention.
Figure 4 is a schematic sectional view of another embodiment of fastening means for fastening a tarpaulin to a loading platform of the means of transport according to the invention.
Figures 5a and 5b are schematic sectional detail views on a larger scale of yet another embodiment of fastening means for fastening a tarpaulin to a loading platform of the means of transport according to the invention.
Figures 6a, 6b and 6c are schematic sectional views of yet another embodiment of fastening means for fastening a tarpaulin to a loading platform of the means of transport according to the invention.
Figure 7 is a schematic rear view of a means of transport according to the invention, which is provided with pivotable flaps for storing surplus tarpaulin and securing it in place.
Figure 8 is a schematic, larger-scale view of a part of a flap according to the invention as shown in Figure 7.

The invention will be explained hereinafter by means of an embodiment thereof in a means of transport, such as a truck. It should be understood, however, that the invention is not limited to this embodiment, but that it can also be implemented advantageously in other means of transport, such as a trailer, or in means used in railway or waterway carriage.

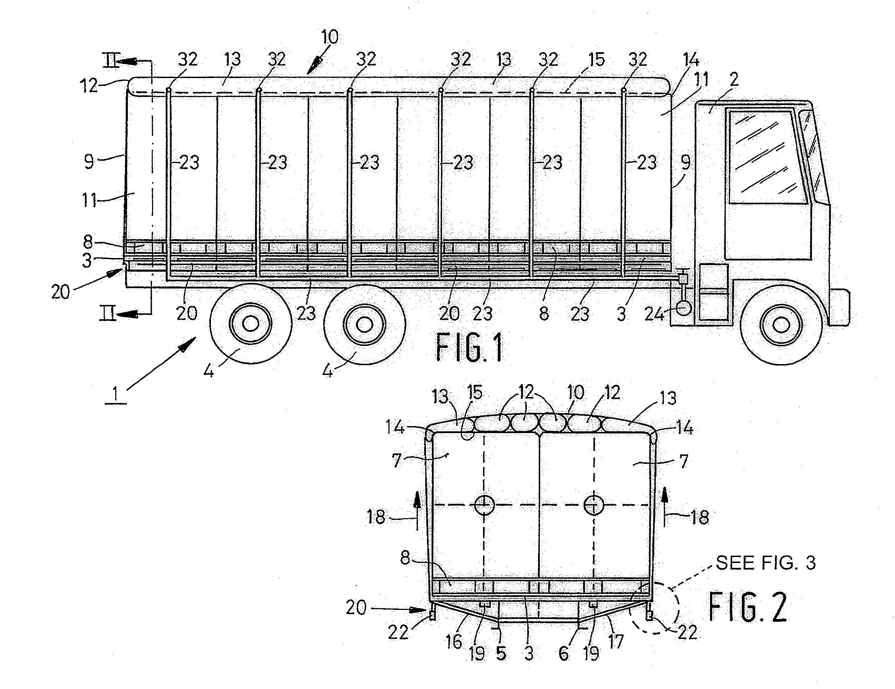

Figure 1 shows a truck 1 comprising a driver's cabin 2 and a loading platform 3. In the illustrated embodiment, the loading platform is supported by two axles 4. The loading platform 3 is elongated in shape.

As is shown in Figure 2, two chassis beams 5, 6 extend under the loading platform, in the longitudinal direction thereof, which chassis beams are fixed to the driver's cabin 2.

In the illustrated embodiment, goods 7 on pallets 8 are present on the loading platform 3. As is schematically shown in Figures 1 and 2, the goods 7 are arranged two by two on the loading platform 3 in the longitudinal direction thereof.

According to the invention, a tarpaulin 10 is laid over the goods 7 in the transverse direction of the loading platform 3, which tarpaulin consists of a number of overlapping, strip-shaped tarpaulins 11 in the illustrated embodiment. It will be understood, that the tarpaulin 10 may also be in one piece. Flaps 9 may be attached to the tarpaulin 10 at the short sides of the goods for covering the goods and preventing goods 7 from slipping off the loading platform.

At least one compartment 12, which can be filled with a fluid, is present between the goods 7 and the tarpaulin 10 or the strip-shaped tarpaulins 11. In the embodiment as illustrated in Figure 1 and Figure 2, a number of compartments 12 extend adjacently to each other in the longitudinal direction of the truck 1. It is not necessary for the implementation of the invention that the entire space between the tarpaulin 10, or a strip-shaped tarpaulin 11, and the goods 7 be filled with compartments to be filled with fluid.

In a preferred embodiment of the invention, at least the compartments 13 engage the boundary edges 14 of the goods 7 on the side thereof remote from the loading platform 3 and, if desired, one or more compartments 12 to be filled with fluid are distributed over the space between the tarpaulin 10 and the goods 7, on the side 15 thereof remote from the loading platform 3, as is schematically illustrated in Figure 2. The compartments 13 engaging the boundary edges 14 of the goods 7 effectively reduce the amount of wear on the tarpaulin 10 or the strip-shaped tarpaulins 11 upon tensioning of the tarpaulin by filling the compartments 12, 13 with fluid. Furthermore, the mere use of the compartments 13, the presence of which practically remains limited to the boundary edges 14, will keep the bulging of the tarpaulin 10 on the side 15 of the goods 7 within bounds, preferably the tarpaulin will remain substantially flat, so as not to add to the overall height of the truck 1 loaded with goods 7 unnecessarily, which might present a problem when passing viaducts, bridges and the like.

It will be understood that the compartments 12, 13 may also extend over the goods 7 in the transverse direction of the loading platform 3, preferably beyond the boundary edges on the side 15 of the goods 7 remote from the loading platform 3, likewise in order to prevent wear on the tarpaulin 10 or the strip-shaped tarpaulins 11 as much as possible.

Although it is possible according to the invention to use separate compartments 12, 13, which may be interconnected, if desired, in order to be filled with fluid, it is also possible in a further embodiment of the invention for the tarpaulin 10 or the strip-shaped tarpaulins 11 and one or more of the compartments 12, 13 to form a whole, in which case the compartments 12, 13 may be interconnected again in order to be filled with fluid.

The tarpaulin 10 may be double-walled in part, in which case one or more compartments (not shown) to be filled with a fluid are present between the double walls.

Preferably, compartments 12, 13 to be filled with a gaseous fluid, such as air, are used. It is also possible to use compartments that can be filled with a liquid, of course, but such compartments have the drawback of undesirably adding to the total weight of the loading platform.

In the situation as shown in Figure 2, the compartments 12 and 13 are already filled with air, and the tarpaulin 10 or the strip-shaped tarpaulins 11 are fastened or secured to the loading platform 3 at their short ends by fastening means 20. A force is exerted on the goods 7 under the influence of the fluid, such that the goods 7 are kept firmly in position on the loading platform 3 and the tarpaulin 10 or the tarpaulins 11 is (are) tensioned.

Inlet/outlet means 23 are connected to the compartments 12, 13 for filling said compartments, which inlet/outlet means 23 are connected to inlet/outlet means 23 present on the side of the loading platform 3 in the embodiment that is shown in Figure 1. The inlet/outlet means 23 are connected to a fluid source 24, such as a compressor for blowing air into the compartments 12, 13. The inlet/outlet means 23 may be flexible hoses which are connected to one of the compartments 12, in which case the other compartments 12, 13 may be interconnected for jointly letting in and discharging fluid. Those skilled in the art will understand that various arrangements and solutions can be used within the scope of the present invention for filling the compartments 12, 13 with fluid.

It has been found that a sufficient holding force for keeping the goods 7 in position on the loading platform 3 is obtained by using a relatively low pressure of up to approximately 0.1 bar in the compartments 12, 13. By way of illustration, in the case of a truck having an elongated loading platform 3 measuring 250 x 1600 cm, a fluid pressure of 0.1 bar results in a pulling/pressure force of about 40 tonnes on the cargo 7 and the loading platform 3. In practice the fluid pressure will range from 0.1 to 0.2 bar. This pressure can be realised by simple means.

When the tarpaulin according to the invention is used, it is not necessary to provide the loading platform 3 with a superstructure for supporting the tarpaulin, which leads to a considerable saving in weight. Furthermore, there is no need to use belts for lashing the goods 7 down on the loading platform 3. These functions are performed by the tensioned tarpaulin 10, 11 according to the invention.

The use of strip-shaped tarpaulins 11, makes it possible to start the placing of the various tarpaulins 11, in such a manner that the tarpaulins partially overlap, already while the goods 7 are being loaded onto the platform 3. The absence of a superstructure that interferes with the freedom of movement advantageously enables loading of the goods 7 onto the loading platform 3 from a side thereof.

As Figure 2 shows, tension elements or tension rods 16, 17 extend from the supporting beams 5, 6 to the side edges of the loading platform 3 for absorbing pulling forces exerted on the loading floor 3 from the side edges thereof as a result of the tarpaulin being inflated, as is schematically indicated by arrows 18.

Said pulling forces 18 make it possible to use a lighter construction for the loading platform 3, which also contributes towards reducing the overall weight of the loading platform 3. If desired, force sensors 19 may be connected to the loading platform 3 or to the tension rods 16, 17, so that the filling of the compartments 12 with fluid can take place in dependence on the forces being registered. The force sensors 19 in question may be connected to the fluid source 24 in that case for controlling the fluid pressure in the compartments 12. Suitable force sensors 19 and control means to be connected to the fluid source 24 are known per se to those skilled in the art and require no further explanation.

For safety reasons, in order to prevent insufficient pressure being exerted on the tarpaulin 10 or on one or more of the strip-shaped tarpaulins 11 in the event of one or more of the compartments 12, 13 springing a leak in the loaded condition of the loading platform 3, pressure valves 32 are furthermore used according to the invention, which pressure valves indicate any loss of pressure in the compartments 12, 13. Said pressure valves 32 may be incorporated in the inlet/outlet means 23 or be separately connected to each individual compartment 12, 13. The pressure valves 32 may be connected, for example via electrical or pneumatic means, for delivering a warning signal in the driver's cabin 2. The driver of the truck 1 will know in that case that an insufficient or lower pulling force is exerted on the tarpaulin 10 or the strip-shaped tarpaulins 11, so that he will have to reduce his speed so as not to allow the forces being exerted on the loading platform 3 to run up too high, in particular in the case of a loading platform 3 that is of lighter construction than a conventional loading platform.

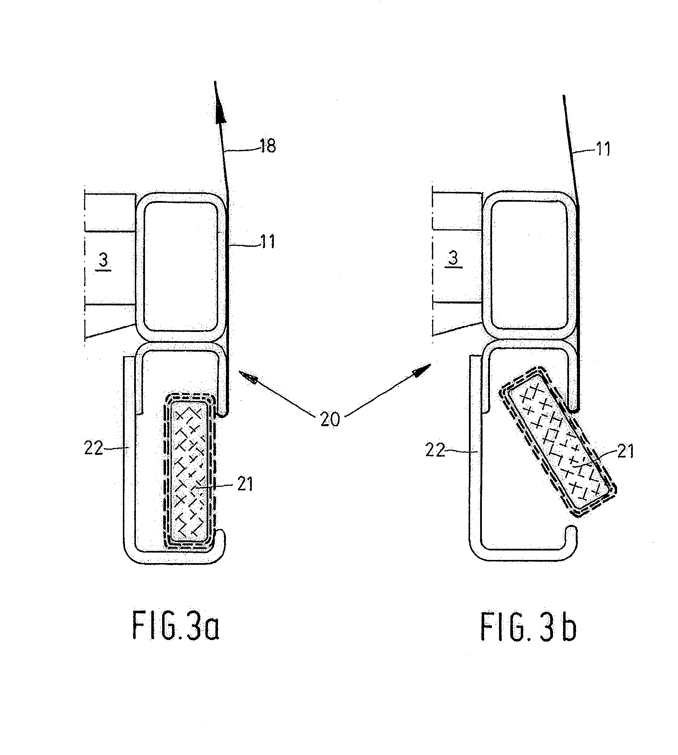

Figures 3a and 3b show a first embodiment of fastening means 20 for detachably fastening or securing the tarpaulin according to the invention to the loading platform 3. Proceeding from the use of strip-shaped tarpaulins 11 as discussed in the foregoing, said tarpaulins are wound on a winding beam 21 at their short ends, which winding beam extends along the width of the strip-shaped tarpaulin 11 in the illustrated embodiment, and which is of approximately rectangular section. A tubular element 22 of approximately C-shaped section is disposed along the loading platform 3. The sectional dimensions of the element 22 and the sectional dimensions of the winding beam 21 are adjusted to each other, so that the winding beam and the tarpaulin 11 that is wound thereon can be retained within the tubular element 22, as is shown in Figure 3a.

The winding beam 21 can be removed from the tubular element 22 via the opening by moving the winding beam 21 upwards in the tubular element 22, seen in the plane of the drawing, and the tarpaulin 11 can be unwound, for example so as to be removed, or be wound up once the cargo has been unloaded.

As is clearly shown in Figures 3a and 3b, the tarpaulin wound on the winding beam 21 is stored within the tubular element 22 as a whole, so that no part of the tarpaulin will hang down.

The tubular elements 22 extend on either side of the loading platform 3, in the longitudinal direction thereof, as is shown in Figure 1 and Figure 2.

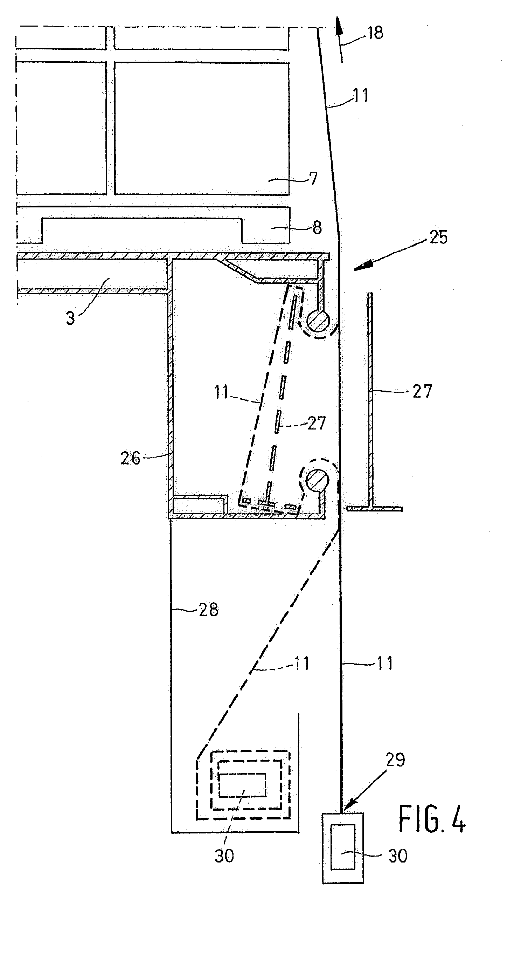

Figure 4 shows a second embodiment of a fastening arrangement 25 for detachably fastening the tarpaulin 11 to the loading platform 3. The fastening arrangement 25 comprises a tubular element 26 beam disposed along the loading platform 3, likewise of approximately C-shaped section, for receiving an elongated clamping piece 27, which is of approximately T-shaped section in the illustrated embodiment. Seen in the plane of drawing, carrying means 28, for example in the form of one or more carrying hooks, extending in the longitudinal direction of the loading platform 3 are disposed below the tubular element 26. The tarpaulin 11 is attached to a winding beam or winding cylinder 30 with its short end 29 for the purpose of being wound thereon. As is shown in broken lines in Figure 4, the tarpaulin that is wound on the winding beam or winding cylinder 30 can be held in the carrying means 28, so that no part of the tarpaulin 11 will project from the loading platform 3 in lateral direction. As is shown in broken lines, the clamping piece 27 is placed in the tubular element 26 for fastening the tarpaulin 11 to the fastening means 25, in such a manner that part of the tarpaulin 11 is retained within the tubular element 26. The clamping piece is held firmly in position within the tubular element 26 under the influence of the pulling force indicated by the arrow 18, which is exerted on the tarpaulin 11 upon filling of the compartments 12, 13 with fluid.

When fluid is discharged from the compartments 12, 13, the tarpaulin 11 will become less taut, and the locking engagement of the tarpaulin 11 can be released by removing the clamping piece 27 from the tubular element 26.

Like the tubular element 22, the tubular element 26 extends on either side of the loading platform 3, or it may form part thereof. The clamping pieces 27 are separate elements, such as an aluminium beam or an aluminium T-piece, which can be introduced into the tubular element 26 after placement of the tarpaulin 11 for clamping down the tarpaulin therein.

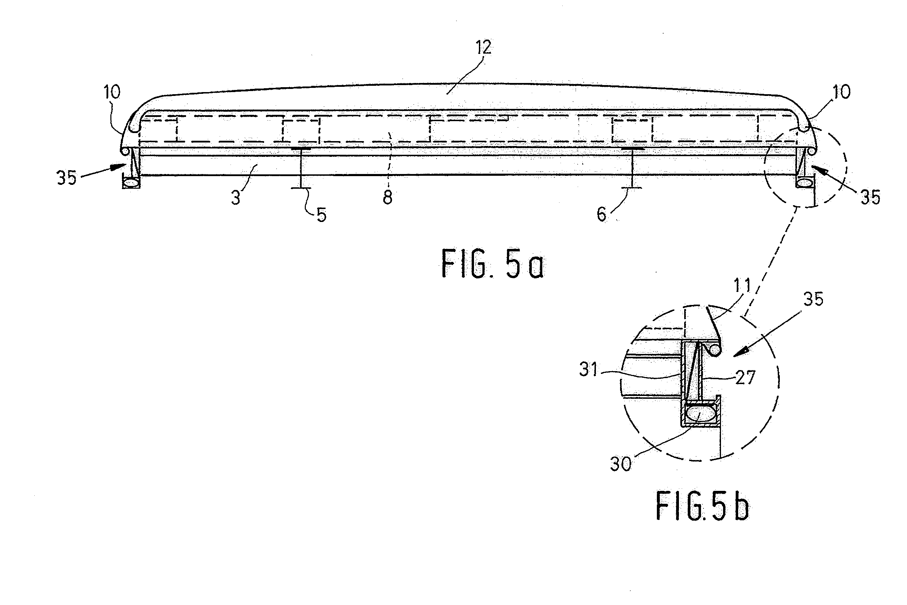

Figures 5a and 5b show a third embodiment of fastening means 35 for fastening the tarpaulin to the loading platform 3.

As the larger-scale detail view of Figure 5b clearly shows, said fastening means also consist of a tubular element 31 of C-shaped section, into which a clamping piece 27 can be placed.

The dimensions of the tubular element 31 are such that the winding beam or winding cylinder 30 with the tarpaulin 11 wound thereon can be accommodated in the tubular element 31 itself, in such a manner that the clamping piece 27 is supported thereon with its short side when present in the tubular element 31.

The connecting and disconnecting of the tarpaulin 11 take place in the same manner as discussed with reference to Figure 4.

Figure 5a shows the tarpaulin 11 in substantially completely rolled-up condition, with pallets still present on the loading platform 3. This is for example the case when no goods 7 are present on the loading platform 3, for example after a cargo has been unloaded. A compartment 12 to be filled with fluid extends in the transverse direction of the loading platform 3 over the pallets 8, or over their upper sides and upper boundary edges.

Figure 6a shows a fourth embodiment of fastening means 40 for fastening or securing a tarpaulin 10 to the loading platform 3.

As the Figure shows, said fastening means 40 likewise consist of an approximately tubular element 41 of C-shaped section. Inside the tubular element 41, a tube or cylinder 42 is connected to one short side, whilst a stop member 43 is present on the other side. The tube or cylinder 42 may be provided with a coating 49, for example a rubber coating, for increasing the friction between the cylinder 42 and the tarpaulin 10.

A clamping piece 27 may be accommodated between the cylinder 42 and the stop 43, in the same manner as discussed above with reference to Figures 5a, 5b, for securing the tarpaulin 10 in place in the tubular element 42.

A beam 44, for example made of aluminium, may be connected to the end of the tarpaulin 10. As is shown in Figure 6a, said aluminium beam 44 is provided with a receiving hole 45 extending in longitudinal direction, which opens into a short side of the beam 45 via a slot 46. The tarpaulin 10 is provided with a loop 47 at its end, which can be inserted into the receiving hole 45 of the beam 44 via the slot 46. The tarpaulin can be connected to the beam 44 by subsequently inserting a cord or wire 48 into the loop 47.

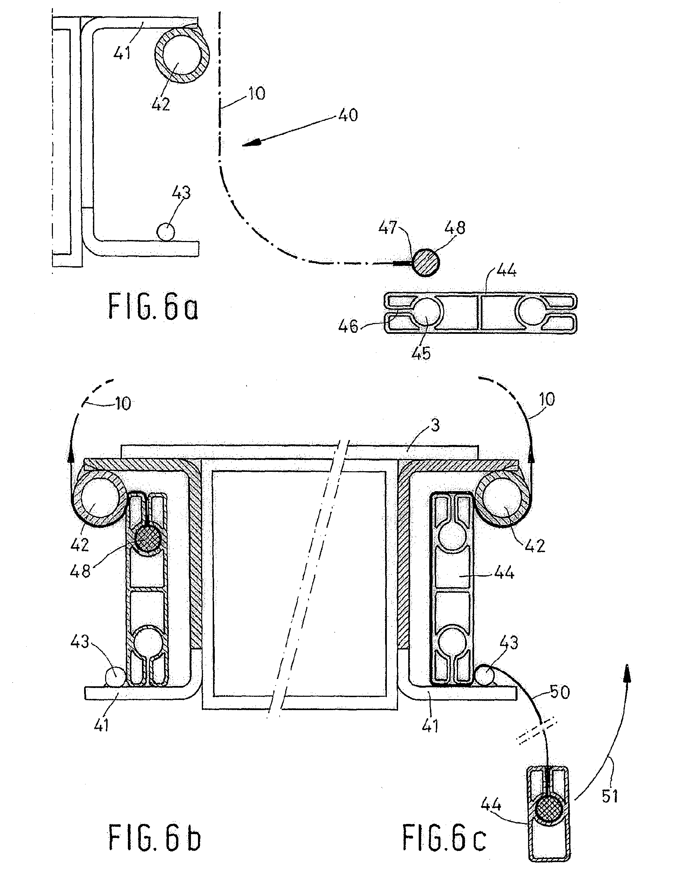

In use, when the tarpaulin 10 is laid over the goods 7, the tarpaulin can be accommodated in the tubular element 41 on one side of the loading platform 3 by means of the beam 44, as is shown in Figure 6b. The other end of the tarpaulin 10 can hang down on the other side of the loading platform 3 in that case, and the part 50 of the tarpaulin 10 that hangs down can be connected to the tubular element 41 on the respective side of the loading platform 3 via a loose beam 44 or a loose clamping piece 27 or other suitable means by placing the beam 44 or the clamping beans 27 into the tubular element 41 as described above. The part 50 of the tarpaulin 10 that extends beyond the tubular element 41 and the beam 44 that is connected thereto can then be folded back over the goods, as is schematically indicated by the arrow 51 in Figure 6c. Said folded-back part forms an additional protection for the tensioned part of the tarpaulin 10, which extends between the tubular elements 41 present on either side of the loading platform 3 upon filling of the compartments 12, 13 with fluid. Furthermore, the folded-back part 50 of the tarpaulin 10 may be provided with publicity or the like.

This fourth embodiment of the fastening means or securing means has the advantage that the tarpaulin 10 or the strip-shaped tarpaulins can be secured in place on the loading platform at any desired length, i.e. also when the loading platform is loaded to half its maximum loading height, for example. A further advantage of this fourth embodiment is the fact that when strip-shaped tarpaulins 11 are used, the overlaps of said strip-shaped tarpaulins 10 can likewise be secured in place in the tubular element 41 as described above.

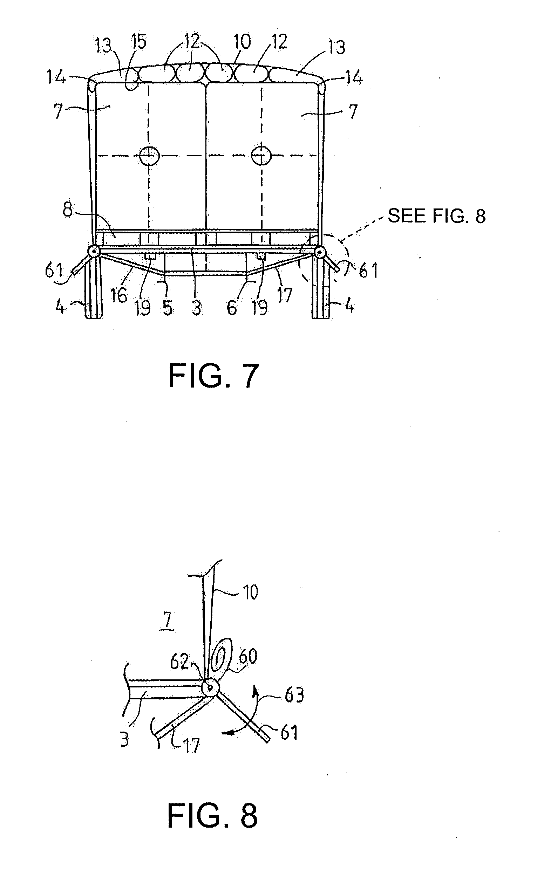

In the case of trucks 1 in which the wheel housings round the wheels 4 closely adjoin the loading platform 3, so that no space is available for mounting carrying means 28 (Figure 4) or for a sufficiently spacious tubular element 30 (see Figures 5a, 5b) for receiving the tarpaulin 10, or for use in combination with the carrying means, the invention, in a further embodiment thereof, provides flaps 61 which extend in the longitudinal direction of the loading platform 3 and which are pivotally connected thereto, as is schematically shown in Figure 7, seen from the rear side of the truck 1.

In the larger-scale schematic detail view of Figure 8, which shows the flap 61 of Figure 7, surplus tarpaulin 60, such as the hanging part 50 as shown in Figure 6c, is rolled up or folded up between the pivotable flap 61 and the tensioned tarpaulin 10. The flap 61 is to that end provided with suitable pivot means 62, so that the flap 61 can be pivoted in the direction indicated by the arrow 63. Means which are known per se may be used for securing the flap 61 in place on the loading platform 3. Preferably, self-locking pivot means 62 are used.

In a preferred embodiment of the invention, the flaps 61 are pivotally connected in such a manner that they can be pivoted onto the loading platform 3 for retaining the tarpaulin 10 between the loading platform 3 and the thus folded-back flap 61 when only a limited amount of cargo, or no cargo at all, is present on the loading platform 3. Preferably, the flaps 61 consist of sub-flaps (not shown) extending in the longitudinal direction of the loading platform 3. Said sub-flaps can take up a position, independently of each other, against the secured tarpaulin 10 or on the loading platform 3.

The flaps 61, which may be made of a metal, a plastic material or wood, for example, may be provided with texts or pictures, for example a commercial text and/or picture or a company name with a logo, on the side that is visible from the outside in use.

It has been found that a saving in weight of up to 15% can be achieved by using the invention, for example as a truck 1, as a result of which more goods can be transported with the overall weight remaining the same, or the same amount of goods can be transported at lower cost as a result of the reduced fuel consumption resulting from the reduced weight and the reduced drag, because the tarpaulin 10, 11 is now in close contact with the goods and need not be higher than the loaded goods themselves.

By way of illustration, in the case of a means of transport having an total weight of forty tonnes, with the truck weighing sixteen tonnes, in which case twenty-four tonnes of cargo can be loaded, a weight saving of about four tonnes can be achieved by using a lighter construction of the loading platform 3 and leaving out the superstructure or tilt that is used with conventional trucks. Said four tonnes of weight being saved can be translated into an additional load-bearing capacity of four tonnes, or in a saving of fuel, road tax and the like.

A tarpaulin 10, 11 of polyester or other material having a corresponding tensile strength will suffice for use with the invention, and the compartments 12, 13 may be made of a suitable plastic material, such as polyester.

The invention as described in the foregoing provides a strongly improved possibility of transporting and/or storing goods, without any specific requirements being made as to the manner in which the goods are loaded, for example with regard to the use of special pallets or special racks in which the goods are transported. Several additions and modifications to the parts as described and shown are available to those skilled in the art without departing from the scope of the invention as defined in the appended claims.

## Claims

1. A means of transport, such as a truck, for the transportation and/or storage of goods, which means of transport comprises a loading platform on which the goods are to be placed, a tarpaulin to be laid over the goods, fastening means for fastening the tarpaulin to opposing edges of the loading platform, and at least one compartment to be filled with a fluid, which is positioned between the tarpaulin and the goods and whose volume can be increased by filling it with said fluid, **characterized in that** the tarpaulin and the fastening means are arranged for fastening the tarpaulin to the loading platform in such a manner that the tarpaulin is tensioned by filling said at least one compartment with a fluid so as to exert a pulling force on the loading platform from the edges thereof for the purpose of increasing the load-bearing capacity of the loading platform.

2. A means of transport according to claim 1, wherein fastening means are provided on at least one edge of the loading platform for detachably connecting or securing the tarpaulin to the loading platform, which fastening means comprise a tubular rail of approximately C-shaped section arranged for receiving and removably retaining therein at least one clamping piece engaging the tarpaulin.

3. A means of transport according to claim 2, wherein the sectional dimensions of the clamping piece and the rail are adjusted to each other for the purpose of removably retaining the clamping piece within the rail.

4. A means of transport according to claim 3, wherein the clamping piece is in the form of a beam.

5. A means of transport according to claim 4, wherein the sectional dimensions of said tubular rail and said beam are adjusted to each other in such a manner that the beam, with the tarpaulin wound thereon, can be locked in position within the tubular rail.

6. A means of transport according to claim 3, wherein said elongated clamping piece is of approximately T-shaped section.

7. A means of transport according to any of the preceding claims, wherein the fastening means comprise carrying means disposed along at least one edge of the loading platform for carrying the beam with the tarpaulin that is wound thereon.

8. A means of transport according to any of the preceding claims, wherein said fastening means comprise at least one pivotable flap extending along at least one edge of the loading platform, which flap functions to retain an end portion of the tarpaulin between the flap and the tensioned part of the tarpaulin in the tensioned condition of the tarpaulin.

9. A means of transport according to claim 8, wherein said at least one flap is arranged for retaining the tarpaulin between the loading platform and said at least one flap in the unused condition of the tarpaulin.

10. A means of transport according to any of the preceding claims, wherein the loading platform is approximately elongated in shape, and wherein the loading platform comprises at least two supporting beams extending in the longitudinal direction thereof, on the side of the loading platform remote from the side on which the cargo is to be placed, from which supporting beams one or more tension elements, such as tension rods, extend towards the longitudinal edges of the loading platform.

11. A means of transport according to any of the preceding claims, wherein force sensors are connected to the loading platform for registering mechanical forces acting on the loading platform, so that the filling of said at least one compartment with fluid can take place in dependence on the registered forces.

12. A means of transport according to any of the preceding claims, wherein said at least one compartment to be filled with fluid engages a side of the goods remote from the loading platform.

13. A means of transport according to claim 12, wherein at least two compartments to be filled with fluid each extend near one edge of the respective side of the goods.

14. A means of transport according to any of the preceding claims, wherein the tarpaulin is built up of separate strip-shaped elements, and wherein said fastening means are arranged in such a manner that strip-shaped elements lying adjacently to each other can be laid over the goods in partially overlapping relationship.

15. A means of transport according to claim 14, wherein a tarpaulin to be laid over the goods on the short sides of the loading platform comprises a flap-shaped part, which flap-shaped part is dimensioned such that it can be secured to the loading platform at the short sides thereof.

16. A means of transport according to any of the preceding claims, wherein said at least one compartment is provided with means for indicating leakage of fluid from said at least one compartment.

17. A means of transport according to any of the preceding claims, wherein said tarpaulin and said at least one compartment are formed as a whole.

18. A means of transport according to claim 17, wherein the tarpaulin is partly double-walled, so that said at least one compartment can be incorporated between the double walls.

19. A means of transport according to any of the preceding claims, wherein the tarpaulin is made of a non-stretch plastic material, such as polyester.

20. A tarpaulin for use with a means of transport according to any of the preceding claims.

21. A method for placing goods on a loading platform of a means of transport, such as a truck, and keeping said goods together thereon by covering the goods with a tarpaulin comprising at least one compartment positioned between the tarpaulin and the goods, which can be filled with a fluid, fastening said tarpaulin to opposing edges of the loading platform and increasing the volume of said compartment by filling it with a fluid, **characterized in that** the tarpaulin is firmly connected to the loading platform and **in that** said at least one compartment is filled with a fluid for tensioning the tarpaulin so as to exert a pulling force on the loading platform from the edges thereof for the purpose of increasing the load-bearing capacity of the loading platform.

22. A method according to claim 21, wherein the goods are placed onto an approximately elongated loading platform from a side thereof.

23. A method according to claim 21 or 22, wherein the tarpaulin is strip-shaped and a number of tarpaulins are laid over the goods present on an approximately elongated loading platform in transverse direction relative to said loading platform, in such a manner that tarpaulins lying adjacently to each other partially overlap, wherein tarpaulins comprising compartments positioned between said tarpaulins, which are to be filled with a fluid, are already laid over the goods present on the loading platform while the goods are being loaded, and said compartments are already filled with fluid, for the purpose of increasing the load-bearing capacity of the loading platform, before the entire loading platform is loaded with goods.
